# EUROPÄISCHE PATENTSCHRIFT

(11) **EP 1 147 569 B1**
(45) Veröffentlichungstag und Bekanntmachung des Hinweises auf die Patenterteilung: **16.10.2002**
(21) Anmeldenummer: 99963524.6
(22) Anmeldetag: 14.12.1999
(51) Int. Cl.: H01M 10/40

(54) **ELEKTROLYTSYSTEM FÜR LITHIUMBATTERIEN UND DESSEN VERWENDUNG SOWIE VERFAHREN ZUR ERHÖHUNG DER SICHERHEIT VON LITHIUMBATTERIEN**
ELECTROLYTE SYSTEMS FOR LITHIUM BATTERIES, THE USE THEREOF AND METHOD FOR ENHANCING THE SAFETY OF LITHIUM BATTERIES
SYSTEME D'ELECTROLYTE POUR PILES AU LITHIUM ET SON UTILISATION, AINSI QUE PROCEDE POUR ACCROITRE LA SECURITE DES PILES AU LITHIUM

(30) Priorität: 19.12.1998 DE 19858924
(43) Veröffentlichungstag der Anmeldung: 24.10.2001
(73) Patentinhaber: Solvay Fluor und Derivate GmbH, 30173 Hannover (DE)
(72) Erfinder: APPEL, Wolfgang, D-65779 Kelkheim (DE); PASENOK, Sergej, D-65779 Kelkheim (DE); BESENHARD, Jürgen, A-8010 Graz (AT); LIE, Lars, Henning, A-8010 Graz (AT); WINTER, Martin, A-8055 Seiersberg (AT)
(74) Vertreter: Fischer, Reiner
(86) Internationale Anmeldenummer: EP9909900
(87) Internationale Veröffentlichungsnummer: WO00038264

(56) Entgegenhaltungen:
- EP-A- 0 807 986
- WO-A-97/44842
- WO-A-98/57385
- US-A- 5 219 683
- PATENT ABSTRACTS OF JAPAN vol. 018, no. 221 (E-1540), 20. April 1994 (1994-04-20) -& JP 06 020719 A (MITSUBISHI PETROCHEM CO LTD;OTHERS: 01), 28. Januar 1994 (1994-01-28)

## Beschreibung

Die Erfindung betrifft Elektrolytsysteme für Lithiumbatterien mit erhöhter Sicherheit und deren Verwendung sowie ein Verfahren zur Steigerung der Sicherheit von Lithiumbatterien.

Tragbare hochwertige elektronische Geräte wie Mobiltelefone, Laptop-Computer, Camcorder etc. erfreuen sich eines extrem schnell wachsenden Marktes. Die adäquate elektrische Versorgung dieser Geräte erfordert leichte Stromquellen von hoher Kapazität und Qualität. Aus Gründen des Umweltschutzes und der Wirtschaftlichkeit finden ganz überwiegend sekundäre, wiederaufladbare Batterien Verwendung. Hier konkurrieren im Wesentlichen drei Systeme: Nickel-Cadmium, Nickel-Metallhydrid und Lithium-ionen Batterien. Ein weiteres interessantes Gebiet für dieses Batteriesystem könnte der Einsatz in elektrisch betriebenen Fahrzeugen sein.

Wegen ihrer herausragenden Leistungscharakteristik hat die Lithiumbatterie bereits große Marktanteile erworben, obwohl sie in der aktuellen Technik erst im Jahr 1994 auf den Markt gebracht wurde. Trotz dieses Siegeszuges der sekundären Lithiumbatterie darf nicht übersehen werden, daß sie unter Sicherheitsaspekten problematisch ist:

Die wiederaufladbaren Lithiumbatterien enthalten meist eine Verbindung aus Lithiumoxid und einem Metalloxid als Kathode (zum Beispiel LiₓMnO₂ oder LiₓCoO₂) und Lithiummetall als Anode, wobei das Lithium bevorzugt als Intercalationsverbindung mit Graphit oder mit Kohle- oder Graphitfasern verwendet wird. Ein Überblick über die Verwendung solcher Batterien wird von K Brandt gegeben ( Solid state ionics 69 (1994), 173-183, Elsevier Science B.V.).

Als Elektrolytflüssigkeiten zur Erzielung hoher Leitfähigkeiten verwendet man nach derzeitigem Stand der Technik bevorzugt Lösungsmittelgemische von mindestens zwei oder auch mehr Komponenten. Das Gemisch muß mindestens eine stark polare Komponente enthalten, die aufgrund ihrer Polarität auf Salze stark dissoziierend wirkt. Als solche polare Komponenten finden im allgemeinen Ethylencarbonat oder Propylencarbonat Verwendung. Diese hochpolaren Lösungsmittel sind relativ viskos und haben meistens relativ hohe Schmelzpunkte, z.B. 35°C für Ethylencarbonat. Um eine ausreichende Leitfähigkeit auch bei niedrigeren Einsatztemperaturen zu gewährleisten, setzt man daher im allgemeinen noch eine oder mehrere niederviskose Komponenten als "Verdünner" zu. Typische Verdünner sind zum Beispiel 1,2-Dimethoxyethan, Dimethylcarbonat oder Diethylcarbonat. Üblicherweise werden die Verdünner in einem Anteil von 40-60% vom Gesamtvolumen zugesetzt. Ein gravierender Nachteil dieser Verdünner-Komponenten liegt in ihrer hohen Flüchtigkeit und den niedrigen Flammpunkten: 1,2-Dimethoxyethan : Sdp. 85°C, Fla.p. -6°C und Explosionsgrenze zwischen 1,6 und 10,4 Vol. %; Dimethylcarbonat: Sdp. 90°C, Fla.p. 18°C. Für diese "Verdünner" gibt es zur Zeit keine gleichwertigen Ersatzstoffe.

Da bei elektrochemischer Anwendung von Elektrolytlösungen und in noch weit stärkerem Maße beim Auftreten von Fehlern (Kurzschluß, Überladen etc.) stets eine Erwärmung eintritt, bedeutet dies - insbesondere beim Aufplatzen der Zelle und Austreten von Lösungsmittel - das Risiko der Entzündung mit den entsprechenden schwerwiegenden Folgen. Dies wird bei den derzeit eingesetzten Systemen durch aufwendige elektronische Regelungen im Prinzip vermieden. Dennoch sind einige Unfälle durch Brände insbesondere bei der Herstellung, wo große Mengen der Lösungsmittel gehandhabt werden, aber auch bei der Nutzung von wiederaufladbaren Lithiumbatterien bekannt geworden.

Eine größere Gefahrenquelle bei der Nutzung entsteht auch beim Einsatz in Elektrofahrzeugen. Hier werden wesentlich größere Mengen Elektrolytflüssigkeit pro Energiespeicher benötigt und das elektronische Management zahlreicher zusammengeschalteter Zellen ist ungleich schwieriger und beinhaltet entsprechend höhere Risiken.

Zur Erhöhung der Sicherheit können Kathoden und Anodenraum durch eine mikroporöse Separatormembran getrennt werden, die so beschaffen ist, daß beim Überschreiten einer bestimmten Grenztemperatur durch Verschmelzen der Poren der Stromfluß unterbrochen wird. Geeignete Membranen dieser Art finden sich zum Beispiel im ®Celgard-Sortiment der Hoechst Celanese Corporation.

Weiterhin kann durch Überdrucksicherungen, die auf Gasentwicklung beim Überladen reagieren, und wie bereits erwähnt durch Überwachungs- und Regelelektronik die Sicherheit von Lithiumbatterien erhöht werden.

Weiters werden auch flammhemmende phosphor- und halogenhaltige Zusätze empfohlen, die sich allerdings häufig negativ auf die Leistungscharakteristik der Batterien auswirken.

All diese Maßnahmen können jedoch nicht ausschließen, daß bei Betriebsstörungen der leichtflüchtige und leichtentzündliche "Verdünner" letztlich doch entflammt und daß nach Ruptur der Zelle ein mit gängigen Löschmitteln kaum mehr beherrschbares Feuer entsteht. Brennendes Lithium reagiert nicht nur mit Wasser, sondern auch mit Kohlendioxid sehr heftig.

Zum speziellen Stand der Technik werden die Druckschriften
JP-A-7 249432 = D1,
EP-A-0 631339 = D2,
EP-A-0 599534 = D3,
EP-A-0 575591 = D4,
US-A-5 169736 = D5,
B. Scrosati, Hrsg., 2^{nd} International Symposium on Polymer Electrolytes, Elsevier, London und New York (1990) = D6,
US-A-5 393621 = D7,
JP-A-06020719 = D8,
US-A-4 804596 = D9,
US-A-5 219683 = D10,
JP-A-5-028822 = D11 und
EP-A-0-821368 = D12
genannt.

Beispielsweise werden in D1 und D2 hochfluorierte Ether als Elektolytlösungsmittel oder als Zusätze zu anderen Elektrolyten vorgeschlagen. Diese sind im allgemeinen thermisch und chemisch sehr stabil und haben hohe Flammpunkte. Sie haben jedoch ein viel zu geringes Lösevermögen für die erforderlichen Lithiumlektrolytsalze, um allein verwendet zu werden und sind auch mit den üblichen Batterielösungsmitteln zu schlecht mischbar.

Teilfluorierte Carbonate sind ebenfalls als Elektrolyte mit erhöhtem Flammpunkt beschrieben (D3). Problematisch ist hier jedoch, daß die aufgrund niedriger Viskosität geeignet erscheinenden Verbindungen nur einen mäßig erhöhten Flammpunkt (37°C) aufweisen und die elektrischen Leitfähigkeiten deutlich unter dem Stand der Technik liegen (Annahme Messungen erfolgten bei Raumtemperatur, keine Temperatur spezifiziert).

Carbamate sind ebenfalls als Verdünner für wasserfreie Elektrolyte beschrieben (D4). Sie weisen zwar gegenüber den derzeit verwendeten Verdünnern höhere Siedepunkte auf, jedoch kaum verbesserte Flammpunkte.

D8 offenbart als Elektrolyte für sekundäre Lithiumbatterien Esterverbindungen der Formel R¹COOR², worin wenigstens einer der Reste R¹ und R² eine Fluorsubstitution aufweist. Bevorzugte Verbindung ist Trifluoressigsäuremethylester. Allerdings hat diese Verbindung einen Siedepunkt von nur 43 °C sowie einen Flammpunkt von -7 °C, was für den Fall einer Beschädigung ein hohes Sicherheitsrisiko darstellt.

Nach dem gegenwärtigen Stand der Technik wird verminderte Entflammbarkeit der Elektrolytlösung vor allem durch Viskositätserhöhung der Elektrolytlösung durch Bindemittel oder Füller beziehungsweise durch die Verwendung bei Raumtemperatur praktisch fester polymerer Elektrolyte erreicht.

In der D5 werden zum Beispiel organische oder anorganische Verdickunsmittel (Polyethylenoxid, SiO₂, Al₂O₃ und andere) beschrieben, um flüssige Elektrolytlösungen zu verfestigen.

Polymere Elektrolyte auf der Basis von Makromolekülen mit zahlreichen polaren Gruppen wie etwa Polyethylenoxide, wie sie etwa aus der D6 bekannt sind, sind ebenfalls aufgrund ihrer geringen Flüchtigkeit weitaus schwerer entflammbar. Ebenso findet man häufig zweifach acylierte Diole oder einfach acylierte Diolmonoalkylether, bei denen die Acylkomponente eine Doppelbindung trägt, d.h. z.B. Acryl- oder Methacrylsäure ist, als Monomerkomponenten für den Aufbau eines solchen gelartigen Polymerelektrolyten. Beispielhaft seien hier die D 11 und D 12 angeführt.

In der D7 werden polymere Elektrolyte beschrieben, deren polare Makromoleküle durch Polymerisation von Organophosphorverbindungen gebildet werden, welche sich durch besonders geringe Entflammbarkeit auszeichnen.

All diesen gelartigen bis festen Elektrolyten ist gemeinsam, daß aufgrund ihrer hohen Viskosität die Beweglichkeit der lonen der in ihnen gelösten Salze weitaus geringer ist als in flüssigen Elektrolytlösungen, so daß insbesondere bei tieferen Temperaturen für die meisten technischen Anwendungen nicht mehr die erforderlichen Leitfähigkeiten erreicht werden.

In D9 werden Ester wie Methylformat und Methylacetat als Verdünnerkomponenten beansprucht. Die Substanzen bieten jedoch sicherheitstechnisch keinerlei Vorteile, da sie ebenfalls sehr niedrige Flamm- und Siedepunkte haben.

In D10 werden Dioldiester als Elektrolytkomponenten vorgeschlagen und hier speziell 1,2-Diacetoxyethylen als bevorzugte Substanz. Diese hat zwar beim Flammpunkt deutliche Vorteile im Vergleich zu den üblichen Verdünnern, doch ist die Viskosiät der Substanz so hoch, daß man zum Erreichen der erforderlichen Leitfähigkeit wiederum einen der herkömmlichen, leicht entzündlichen Verdünner wie Dimethoxyethan zusetzen muß.

Angesichts des hierin angegebenen und diskutierten Standes der Technik war es mithin Aufgabe der Erfindung, neue Elektrolytlösungsmittel zur Verfügung zu stellen, die chemisch und physikalisch stabil sind, mit anderen geeigneten Lösungsmitteln ausreichend mischbar sind, Lithium-Leitsalze ausreichend lösen und einen deutlich erhöhten Flammpunkt aufweisen, aber dennoch ein Viskositäts- und Leitfähigkeitsverhalten zeigen, welches sie für den praktischen Einsatz auch bei tiefen Temperaturen geeignet macht.

Darüber ist bei der zunehmenden Bedeutung wiederaufladbarer Lithiumzellen auch die einfache Recyclierbarkeit der Komponenten ein durchaus wichtiger Aspekt.

Gelöst werden diese sowie weitere nicht näher angegebene Aufgaben, die sich jedoch ohne weiteres aus der einleitenden Diskussion des Standes der Technik ergeben oder ableiten lassen, durch ein Elektrolytsystem der eingangs erwähnten Art, welches die Merkmale des kennzeichnenden Teils des Anspruches 1 aufweist. Vorteilhafte Abwandlungen des erfindungsgemäßen Elektrolytsystems werden in den abhängigen Produktansprüchen unter Schutz gestellt. Im Hinblick auf das Verfahren zur Erhöhung der Sicherheit von Lithiumbatterien gibt der Gegenstand des entsprechenden Verfahrensanspruchs eine Lösung des der Erfindung zugrundeliegenden Problems an.

Dadurch, daß das Elektrolytsystem für Lithiumbatterien mit erhöhter Sicherheit aufweisend wenigstens ein Lithium enthaltendes Leitsalz sowie wenigstens eine Elektrolytflüssigkeit, einen wirksamen Gehalt an wenigstens einer von einem Diol abgeleiteten teilfluorierten Verbindung der allgemeinen Formel (I)

**R**^{**1**}**CO-O-[CHR**^{**3**}**(CH**_{**2**}**)**_{**m**}**-O]**_{**n**}**-R**² (I)

aufweist, worin
- R¹: (C₁-C₈)-Alkyl oder (C₃-C₈)-Cycloalkyl ist, wobei jeder der vorgenannten Reste teil- oder perfluoriert ist, so daß wenigstens ein Wasserstoffatom des Restes durch Fluor ersetzt ist,
- R²: (C₁-C₈)-Alkylcarbonyl oder (C₃-C₈)-Cycloalkylcarbonyl ist, wobei jeder der vorgenannten Reste gegebenenfalls teil- oder perfluoriert sein kann,
- R³: Wasserstoff, (C₁-C₈)-Alkyl oder (C₃-C₈)-Cycloalkyl ist,
- m: 0, 1, 2 oder 3 ist, und
- n: für 1, 2 oder 3 steht,
gelingt es auf besonders vorteilhafte und nicht ohne weiteres vorhersehbare Weise, einen Elektrolyten oder ein Elektrolytsystem bereitzustellen, welcher bzw. welches die bekannten Elektrolytsysteme für Lithiumbatterien im üblichen Anforderungsspektrum übertrifft oder ihnen zumindest gleichwertig ist und zugleich eine erhöhte Sicherheit gegenüber den vorbekannten Systemen ermöglicht.

Insbesondere wurde überraschend gefunden, daß Elektrolytsysteme für Lithiumbatterien mit einem Zusatz an einer Verbindung der allgemeinen Formel (I) folgendem Eigenschaftsspektrum in vorzüglichem Maße genügen:
- Hohe thermische Stabilität;
- hoher Flammpunkt;
- niedriger Dampfdruck;
- hoher Siedepunkt;
- niedrige Viskosität;
- Mischbarkeit mit batterieüblichen Lösungsmitteln, insbesondere mit Ethylencarbonat, Propylencarbonat, Diethylcarbonat oder Lactonen, z.B. γ-Butyrolacton;
- ausreichendes Lösevermögen für fluorhaltige Lithiumleitsalze, beispielsweise LiPF₆, LiN(SO₂CF₃)₂ oder LiC(SO₂CF₃)₃;
- hohe Stabilität gegenüber metallischem Lithium;
- hohe Zersetzungsspannung;
- ausgezeichnete Eigenschaften für die Ausbildung der erforderlichen Schutzfilme an den Elektroden;
- gutes Lösevermögen für Kohlendioxid: CO₂ beschleunigt den Aufbau von Schutzfilmen auf Lithium und LiCₙ-Anoden;
- gutes Lösevermögen für SO₂: SO₂ verbessert die Leitfähigkeit über den gesamten Temperaturbereich - besonders signifikant bei tieferen Temperaturen - und den Aufbau von Schutzfilmen auf den Elektroden.

Ein weiterer Vorteil der Erfindung besteht darin, daß erfindungsgemäße, teilfluorierte Verbindungen im allgemeinen nicht mit Wasser mischbar sind. Daraus ergibt sich für das Recycling verbrauchter Batterien eine einfache Möglichkeit diese Komponenten zur Aufreinigung und Wiederverwendung von den wassermischbaren Komponenten, d.h. Leitsalzen und ggfs. vorhandenem Carbonatlösungsmittel abzutrennen.

In der obigen Formel (I) ist unter der Bezeichnung "(C₁-C₄-)Alkyl" ein unverzweigter oder verzweigter Kohlenwasserstoffrest mit ein bis vier Kohlenstoffatomen zu verstehen, wie beispielsweise Methyl-, Ethyl-, n-Propyl-, 1-Methylethyl-, n-Butyl-, 2-Methylpropyl- oder 1,1-Dimethylethylrest;

Der Ausdruck "(C₁-C₈)-Alkyl" umfaßt die beim Ausdruck "(C₁-C₄)-Alkyl" genannten Reste sowie beispielsweise Pentyl-, 1-Methylbutyl-, 2-Methylbutyl-, Isopentyl- (3-Methylbutyl-), 1,2-Dimethylpropyl-, 1,1-Dimethylpropyl-, 2,2-Dimethylpropyl-, 3,3-Dimethylpropyl-, 1-Ethylpropyl-, 2-Ethylpropyl-, n-Hexyl-, die verzweigten Hexyle, insbesondere unter anderem 1-Methylpentyl-, 2-Methylpentyl-, 3-Methylpentyl-, 4-Methylpentyl-, 1,1-Dimethylbutyl-, 2,2-Dimethylbutyl-, 3,3-Dimethylbutyl-, 1,2-Dimethylbutyl-, 1,3-Dimethylbutyl-, 2,3-Dimethylbutyl-, 1-Ethylbutyl-, 2-Ethylbutyl-, 3-Ethylbutyl-, 1,1,2-Trimethylpropyl-, 1,2,2-Trimethylpropyl-, 1-Methyl-1-ethylpropyl-, 1-Ethyl-2-methylpropyl-, sowie n-Heptyl-, n-Octyl- und die verzweigten Heptyl- und Octylreste, wie etwa 1,1,3,3-Tetramethylbutylrest;

Die Bezeichnung "(C₃-C₈)-Cycloalkyl" umfaßt Cyclopropyl-, Cyclobutyl-, Cyclopentyl-, Cyclohexyl-, Cycloheptyl- und Cyclooctylgruppe; außerdem umfaßt die Bezeichnung "(C₃-C₈)-Cycloalkyl" auch noch solche Kohlenwasserstoffreste, welche mit einem oder mehreren der unter "(C₁-C₄)-Alkyl" genannten Reste substituiert sind, wie z. B. 1-Methylcyclohexyl-, 2-Methylcyclohexyl-, 3-Methylcyclohexyl-, 4-Methylcyclohexyl-, 1,4-Dimethylcyclohexyl-, 4-tert-Butylcyclohexyl- und dergleichen;

Unter der Bezeichnung "(C₁-C₄)-Alkylcarbonyl" wird ein unverzweigter oder verzweigter Kohlenwasserstoffrest mit ein bis vier Kohlenstoffatomen verstanden, wie beispielsweise Methylcarbonyl-, Ethylcarbonyl-, Propylcarbonyl, 1-Methylethylcarbonylrest und dergleichen;

Der Ausdruck "(C₁-C₈)-Alkylcarbonyl" umfaßt die beim Ausdruck "(C₁-C₄)-Alkylcarbonyl" genannten Reste sowie beispielsweise Butylcarbonyl-, 2-Methylpropylcarbonyl-, 1,1-Diemthylethylcarbonyl-, Pentylcarbonyl-, 1-Methylbutylcarbonyl-, 2-Methylbutylcarbonyl-, Isopentylcarbonyl-(3-Methylbutylcarbonyl-), 1,2-Dimethylpropylcarbonyl-, 1,1-Dimethylpropylcarbonyl-, 2,2-Dimethylpropylcarbonyl-, 3,3-Dimethylpropylcarbonyl-, 1-Ethylpropylcarbonyl-, 2-Ethylpropylcarbonyl-, n-Hexylcarbonyl-, 1-Methylpentylcarbonyl-, 2-Methylpentylcarbonyl-, 3-Methylpentylcarbonyl-, 4-Methylpentylcarbonyl-, 1,1-Dimethylbutylcarbonyl-, 2,2-Dimethylbutylcarbonyl-, 3,3-Dimethylbutylcarbonyl-, 1,2-Dimethylbutylcarbonyl-, 1,3-Dimethylbutylcarbonyl-, 2,3-Dimethylbutylcarbonyl-, 1-Ethylbutylcarbonyl-, 2-Ethylbutylcarbonyl-, 3-Ethylbutylcarbonyl-, 1,1,2-Trimethylpropylcarbonyl-, 1,2,2-Trimethylpropylcarbonyl-, 1-Methyl-1-ethylpropylcarbonyl-, 1-Ethyl-2-methylpropylcarbonyl-, sowie n-Heptylcarbonylrest; Die Bezeichnung "(C₃-C₈)-Cycloalkylcarbonyl" umfaßt Cyclopropyl-, Cyclobutyl-, Cyclopentyl-, Cyclohexyl-, Cycloheptylgruppen, die über eine Carbonylgruppe gebunden sind; außerdem umfaßt die Bezeichnung "C₃-C₈-Cycloalkyl" auch noch solche Reste, welche mit einem oder mehreren der unter "(C₁-C₄-)Alkyl" genannten Reste substituiert sind, wie z. B. 4-Methylcyclohexylcarbonyl- und dergleichen;

Teilfluorierte Verbindungen oder Reste bedeuten im Rahmen der Erfindung Verbindungen oder Reste, in welchen wenigstens eines aber nicht alle der mit Kohlenstoff verbundenen Wasserstoffatome der jeweiligen Verbindung oder des jeweiligen Restes durch Fluor ersetzt sind.

Perfluorierte Verbindungen oder Reste sind im Rahmen der Erfindung Verbindungen oder Reste, in denen alle mit Kohlenstoff verbundenen Wasserstoffatome der Verbindung oder des Restes durch Fluor ersetzt sind.

Die erfindungsgemäße Lösung des Sicherheitsproblems von sekundären Lithiumbatterien wird durch den Einsatz von Verbindungen der Formel (I) als wesentlicher Komponente des Elektrolytsystems erreicht.

Grundsätzlich handelt es sich bei den Verbindungen der allgemeinen Formel (I) um von Diolen abgeleitete teilfluorierte Diester.

Hierbei ist der Rest R¹ der Verbindungen der allgemeinen Formel (I) essentiell ein fluorierter Rest. Das bedeutet, daß im Rest R¹ wenigstens ein Wasserstoff durch ein Fluor ersetzt ist. Der Rest R¹ kann allerdings auch perfluoriert sein. Besonders zweckmäßige Elektrolytsysteme ergeben sich z. B. mit Verbindungen der Formel (I), worin der Rest R¹ (C₁-C₄)-Alkyl ist, worin drei und soweit möglich bis zu sieben Wasserstoffatome durch Fluoratome ersetzt sind. Besonders bevorzugt ist R¹ CF₃, CHF₂ oder CH₂F. Äußerst zweckmäßig ist R¹ CF₃.

Bei Verbindungen der Formel (I) ist der Rest R² nicht fluoriert, teilweise fluoriert oder perfluoriert. Ein Elektrolytsystem mit herausragender Leistungscharakteristik resultiert unter anderem beim Gehalt an einer oder mehreren Verbindungen der Formel (I), bei welcher der Rest R² (C₁-C₄)-Alkylcarbonyl ist, worin gegebenenfalls soweit möglich bis zu fünf Wasserstoffatome durch Fluoratome ersetzt sind. Besonderes Interesse genießen Verbindungen mit Resten R² gleich CH₃CO oder CH₃CH₂CO, worin soweit möglich bis zu fünf Wasserstoffatome durch Fluor ersetzt sein können.

In noch einer vorteilhaften Ausführungsform kennzeichnet sich ein Elektrolytsytem dadurch, daß Verbindungen der Formel (I) in ihm enthalten sind, worin der Rest R³ (C₁-C₄)-Alkyl ist. Ganz besonders zweckmäßig ist der Rest R³ ein Wasserstoff- oder Methylrest.

Von besonderem Interesse sind auch Systeme, die Diester der Formel (I) aufweisen, in der m für 1 steht.

Systeme mit hoher Zweckmäßigkeit werden auch dann erhalten, sofern im Elektrolytsystem wenigstens eine Verbindung der Formel (I) enthalten ist, bei der n 1 oder 2 ist.

Verbindungen der Formel (I) mit ganz besonderem Nutzen im erfindungsgemäßen Elektrolytsystem sind unter anderem:

| R1 | R2 | R3 | m | n |
|---|---|---|---|---|
| CF₃ | CF₃CO | H | 1 | 1 |
| CF₃ | CH₃CO | H | 1 | 1 |
| CF₃ | CH₂FCO | H | 1 | 1 |
| CF₃ | CHF₂CO | H | 1 | 1 |
| CF₃ | CF₃CO | CH₃ | 1 | 1 |
| CF₃ | CH₃CO | CH₃ | 1 | 1 |
| CF₃ | CH₂FCO | CH₃ | 1 | 1 |
| CF₃ | CHF₂CO | CH₃ | 1 | 1 |
| CF₃ | CF₃CO | H | 1 | 2 |
| CF₃ | CH₃CO | H | 1 | 2 |
| CF₃ | CH₂FCO | H | 1 | 2 |
| CF₃ | CHF₂CO | H | 1 | 2 |
| CF₃ | CF₃CO | CH₃ | 1 | 2 |
| CF₃ | CH₃CO | CH₃ | 1 | 2 |
| CF₃ | CH₂FCO | CH₃ | 1 | 2 |
| CF₃ | CHF₂CO | CH₃ | 1 | 2 |

Die Stoffe der allgemeinen Formel I lassen sich als Verdünnungsmittel für schwerentflammbare, viskose Komponenten verwenden, beispielsweise Ethylencarbonat und Propylencarbonat. Auf diese Weise lassen sich aprotische Elektrolytsysteme herstellen, die praktisch kaum noch entflammbar sind.

Die erfindungsgemäßen Elektrolytsysteme für Lithiumbatterien mit erhöhter Sicherheit, die wenigstens ein Lithium enthaltendes Leitsalz sowie wenigstens eine Elektrolytflüssigkeit aufweisen beinhalten "einen wirksamen Gehalt" an einer oder mehreren Verbindungen der allgemeinen Formel (I). Hierunter wird im Rahmen der Erfindung eine Menge an von Diolen abgeleiteter Verbindung der Formel (I) verstanden, die zur Konstruktion einer gebrauchs- und funktionsfähigen sekundären Lithiumbatterie ausreichend ist.

In einer besonderen Ausführungsform der Erfindung beträgt der Gehalt von Diolderivaten der Formel (I) 2 bis 100, vorzugsweise 3-30 Vol.-%, bezogen auf das gesamte Volumen des Elektrolytsystems. D. h., daß die von Diolen abgeleiteten Diester der Formel (I) alleiniges Löse- oder auch Verdünnungsmittel einer sekundären Lithiumbatterie sein können.

Liegt der Anteil der erfindungsgemäß einzusetzenden Diolabkömmlinge der Formel (I) am Elektrolytsystem einer sekundären Lithiumbatterie unter 2 Vol.-%, treten die oben erwähnten Vorteile nicht so ausgeprägt hervor. Üblicherweise liegt der Gehalt bei 2 bis 50 Vol.-%, vorzugsweise 3 bis 30 Vol.-%, bezogen auf das Gesamtvolumen des Elektrolytsystems.

Die Verbindungen gemäß Formel (I) werden vorteilhafterweise im allgemeinen nicht in reiner Form allein als Sicherheitselektrolytflüssigkeiten für nicht-wäßrige Batteriesysteme dienen, sondern sie werden in Kombination mit bekannten Elektrolytflüssigkeiten wie Carbonaten, Estern, Lactonen, Nitrilen und dergleichen als Elektrolytflüssigkeitssysteme oder -kombinationen eingesetzt werden oder zur zusätzlichen Erhöhung der Leitfähigkeit über den gesamten Temperaturbereich und weiteren Verbesserung der Schutzfilmbildung an den Elektroden noch bestimmte Zusätze (beispielsweise bestimmte Gase) aufweisen.

Aufgrund der obigen Erläuterungen handelt es sich ebenfalls um sehr zweckmäßige Abwandlungen der erfindungsgemäßen Elektrolytsysteme, wenn neben dem Gehalt an mindestens einem Diol der allgemeinen Formel (I) ein zusätzlicher Gehalt an Ethylencarbonat und/oder Propylencarbonat enthalten ist.

Eine weitere sehr zweckmäßige Abwandlung der erfindungsgemäßen Elektrolytsysteme liegt vor, wenn neben dem Gehalt an mindestens einem Diol der allgemeinen Formel (I) und dem Gehalt an Ethylencarbonat und/oder Propylencarbonat noch ein teilfluoriertes Carbonsäureamid, z.B. Trifluoressigsäure-N,N-dimethylamid, enthalten ist.

Die teilfluorierten Diolabkömmlinge gemäß Formel (I) verbessern auch das Lösungsvermögen für unpolare oder wenig polare Gase, insbesondere CO₂, N₂, N₂O, SF₆, SO₂FCl oder SO₂F₂. Diese Gase können vorteilhaft als Schutzgas in Lithiumbatterien eingesetzt werden, da sie einen positiven Effekt auf die an der Grenzfläche Elektrode/Elektrolyt ablaufenden Reaktionen haben [vgl.J.O. Besenhard et. al., J. Power Sources, 44 (1993), 413].

Von besonderem Interesse sind erfindungsgemäße Elektrolytsysteme daher auch für sekundäre Lithiumbatterien, in denen SO₂ oder CO₂ als Schutzgas zum Einsatz kommen, respektive solche Systeme, die mit SO₂ oder CO₂ gesättigt sind. Hierdurch wird eine ausgesprochen vorteilhafte Schutzfilmbildung an den Elektroden unterstützt.

Besonders zweckmäßige Systeme ergeben sich auch, wenn sie aus den Komponenten Leitsalz, teilfluoriertes Diol der allgemeinen Formel (I), Ethylen- und/oder Propylencarbonat und SO₂ oder CO₂ bestehen.

Die Verbindungen der Formel (I) lassen sich zum Teil nach literaturbekannten Verfahren synthetisieren oder nach modifizierten Literaturverfahren herstellen und sind damit verfügbar.

In der Tabelle 1 sind einige Beispiele für physikalische Eigenschaften von Diolestern zusammengefaßt. Verbindungen 2 und 3 sowie 5 und 6 sind als Vergleichssubstanzen angeführt.

**Tabelle 1**

| Verbindung Nr. | Siedepunkt °C | Flammpunkt °C | Viskosität mm²/sec |
|---|---|---|---|
| 1 | 157 | >110 | 1,44 |
| 2 | 186 | 97 | 2,28 |
| 3 | 138 | 41 | 0,73 |
| 4 | 202 | >110 | 2,66 |
| 5 | 132 | 86 | 1,17 |
| 6 | 163 | 83 | 1,54 |
| 1: 1,2-Bis(trifluoracetoxy) ethan; | | | |
| 2: 1,2-Bis(acetoxy) ethan; | | | |
| 3: 1-Acetoxy-2-methoxy ethan; | | | |
| 4: Bis(2-trifluoracetoxy) diethyl ether; | | | |
| 5: 1-Trifluoracetoxy-2-trifluorethoxy ethan; | | | |
| 6: 1-Acetoxy-2-trifluorethoxy ethan; | | | |

Gegenstand der Erfindung sind auch sekundäre Lithiumbatterien mit erhöhter Sicherheit, die dadurch gekennzeichnet sind, daß sie ein erfindungsgemäßes Elektrolytsystem enthalten.

Die Erfindung stellt auch ein Verfahren zur Erhöhung der Sicherheit einer sekundären Lithiumbatterie zur Verfügung, welches sich dadurch auszeichnet, daß man als Elektrolyt ein erfindungsgemäßes Elektrolytsystem einsetzt.

Schließlich ist Gegenstand der Erfindung auch die Verwendung von Verbindungen der allgemeinen Formel (I) als oder in Sicherheits-Elektrolytsystem(en) für Lithiumbatterien.

Die nachfolgenden Beispiele veranschaulichen den Gegenstand der Erfindung.

Zur Herstellung des Elektrolyten werden zuerst die verwendeten Lösungsmittelkomponenten wie folgt vorbereitet:

Ethylencarbonat (> 99 %, Firma Merck) wird im Ölpumpenvakuum destilliert (Siedepunkt 85 bis 95 °C) und über aktiviertem Molekularsieb (Firma Roth, Porenweite 4 Angström) bei 150 °C 3 Tage entwässert unter getrockneter Argonatmosphäre (Argon, 99,996 %, Firma AGA, wurde zunächst, um Sauerstoffspuren zu entfernen, bei 150 °C über mit Argon W5 [Gemisch aus 95 % Argon und 5 % Wasserstoff, technische Reinheit, Firma AGA] reduziertes Kupfer-(I)-oxid [Firma BASF] geleitet und anschließend über aktiviertem Molekularsieb getrocknet) bei 60 °C gelagert.

Propylencarbonat (purum, Firma Aldrich) wird im Ölpumpenvakuum über eine 1,5 m lange, verspiegelte Füllkörperkolonne destilliert (Siedepunkt 64 bis 66 °C) und über aktiviertem Molekularsieb unter getrockneter Argonatmosphäre bei Raumtemperatur gelagert. Nach der Reinigung und Trocknung wird der Restwassergehalt der Lösungsmittel nach der Karl-Fischer-Methode (zum Beispiel mit dem automatischen Titriergerät Mitsubishi CA 05) bestimmt. Der Wassergehalt soll unter 15 ppm liegen.

Die fluorierte Lösungsmittelkomponente wird einige Tage über aktiviertem Molekularsieb unter getrockneter Argonantmosphäre bei Raumtemperatur getrocknet.

Die Herstellung der Elektrolytlösungen findet mit der sogenannten Schlenktechnik im getrockneten Argonstrom statt, wobei die verwendeten Glasgeräte mit Schutzgasanschluß vor Gebrauch in der entleuchteten Bunsenbrennerflamme unter mehrmaligem Wechsel von Argonspülung und Ölpumpenvakuumsog von anhaftender Feuchtigkeit befreit werden.

### Beispiel 1

Herstellung eines Sicherheitsbatterie-Elektrolyten auf der Basis von 1,2-Bis(trifluoracetoxy)ethan (Verbindung 1 aus Tabelle 1)/Propylencarbonat (1:1).

In einer 1:1 (V/V) Mischung von 1,2-Bis(trifluoracetoxy)ethan und Propylencarbonat (PC) werden 28,7 g Lithium bis(trifluormethansulfonyl)imid (0,1 mol) gelöst und anschließend durch Zusatz der gleichen Mischung auf 100 ml aufgefüllt. Die Leitfähigkeit dieses Elektrolyten wurde von -30 bis +60 °C gemessen.
Die Ergebnisse sind in Tabelle 2 zu ersehen.

### Beispiel 2

Herstellung eines Sicherheitsbatterie-Elektrolyten auf der Basis von 1,2-Bis(trifluoracetoxy)ethan/Propylencarbonat (1:1) mit Lithiumhexafluorophosphat.

Die Herstellung des Elektrolyten erfolgte wie in Beispiel 1 mit dem Unterschied, daß als Elektrolytsalz LiPF₆ eingesetzt wurde. Die Leitfähigkeit dieses Elektrolyten wurde von -30 bis +60 °C bestimmt.
Die Ergebnisse sind in Tabelle 2 dargestellt.

### Beispiel 3

Herstellung eines Sicherheitsbatterie-Elektrolyten auf der Basis von 1,2-Bis(trifluoracetoxy)ethan/Propylencarbonat (1:1) mit Zusatz von Schwefeldioxidgas und Lithium-bis(trifluormethansulfon)-imid.
In 80 ml der mit SO₂-Gas gesättigten 1:1 Mischung von 1,2-Bis (trifluoracetoxy)ethan/Propylencarbonat wurden 28,7 g (0,1 mol) des Imids gelöst und anschließend mit weiterem SO₂-gesättigtem Amid auf 100 ml aufgefüllt. Die Leitfähigkeit des so erhaltenen Elektrolyten wurde von -30 bis +60 °C bestimmt.
Die Ergebnisse sind in Tabelle 2 zu ersehen.

**Tabelle 2**

| Beispiel Nr. | Leitfähigkeit [mS/cm] | | | |
|---|---|---|---|---|
| | -20 [°C] | 0 [°C] | 25 [°C] | 40 [°C] |
| 1 | 0,8 | 1,3 | 2,6 | 3,4 |
| 2 | 0,9 | 1,8 | 3,7 | 5,5 |
| 3 | 1,4 | 2,9 | 4,7 | 6,8 |

### Beispiel 4

Herstellung eines Sicherheitsbatterie-Elektrolyten auf der Basis von 1,2-Bis(trifluoracetoxy)ethan/Propylencarbonat 20:80 mit Lithiumhexafluorophosphat.

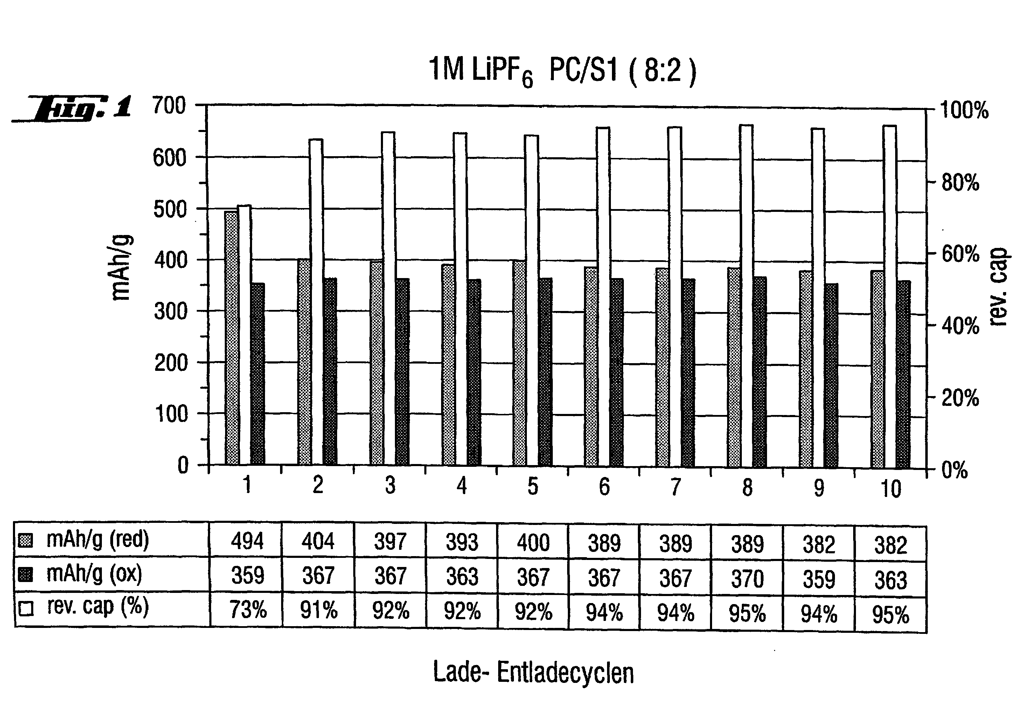

Die Herstellung des Elektrolyten erfolgte wie in Beispiel 2 mit dem Unterschied, daß 1,2-Bis(trifluoracetoxy)ethan hier nur als Zusatz mit einem Anteil von 20% eingesetzt wurde. In Fig.1 ist das Verhalten der Elektrolysezelle über 10 Lade/Entladungscyclen gezeigt.

Weitere Vorteile und Ausführungsformen der Erfindung ergeben sich aus den nachfolgenden Patentansprüchen.

## Patentansprüche

1. Elektrolytsystem für Lithiumbatterien mir erhöhter Sicherheit aufweisend wenigstens ein Lithium enthaltendes Leitsalz sowie wenigstens eine Elektrolytflüssigkeit, **gekennzeichnet durch** einen wirksamen Gehalt an wenigstens einer von einem Diol abgeleiteten teilfluorierten Verbindung der allgemeinen Formel (I)
**R**^{**1**}**CO-O-[CHR**^{**3**}**(CH**_{**2**}**)**_{**m**}**-O]**_{**n**}**-R**^{**2**} (I)
worin
R¹ (C₁-C₈)-Alkyl oder (C₃-C₈)-Cycloalkyl ist, wobei jeder der vorgenannten Reste teil- oder perfluoriert ist, so daß wenigstens ein Wasserstoffatom des Restes **durch** Fluor ersetzt ist,
R² (C₁-C₈)-Alkylcarbonyl oder (C₃-C₈)-Cycloalkylcarbonyl ist, wobei jeder der vorgenannten Reste gegebenenfalls teil- oder perfluoriert sein kann,
R³ Wasserstoff, (C₁-C₈)-Alkyl oder (C₃-C₈)-Cycloalkyl ist,
m 0, 1, 2 oder 3 ist, und
n für 1, 2 oder 3 steht.

2. Elektrolytsystem nach Anspruch 1, **dadurch gekennzeichnet, daß** in der Formel (I) der Rest R¹ (C₁-C₄)-Alkyl ist, worin drei und soweit möglich bis zu sieben Wasserstoffatome durch Fluoratome ersetzt sind.

3. Elektrolytsystem nach Anspruch 1 oder 2, **dadurch gekennzeichnet, daß** in der Formel (I) der Rest R² (C₁-C₄)-Alkylcarbonyl ist, worin gegebenenfalls soweit möglich bis zu fünf Wasserstoffatome durch Fluoratome ersetzt sind.

4. Elektrolytsystem nach einem oder mehreren der vorhergehenden Ansprüche, **dadurch gekennzeichnet, daß** in der Formel (I) der Rest R³ (C₁-C₄)-Alkyl ist.

5. Elektrolytsystem nach einem oder mehreren der vorhergehenden Ansprüche, **dadurch gekennzeichnet, daß** in der Formel (I) m für 1 steht.

6. Elektrolytsystem nach einem oder mehreren der vorhergehenden Ansprüche, **dadurch gekennzeichnet, daß** in der Formel (I) n 1 oder 2 ist.

7. Elektrolytsystem nach einem oder mehreren der vorhergehenden Ansprüche, **dadurch gekennzeichnet, daß** in der Formel (I) R¹ CF₃, CHF₂ oder CH₂F ist.

8. Elektrolytsystem nach einem oder mehreren der vorhergehenden Ansprüche, **dadurch gekennzeichnet, daß** in der Formel (I) R² CH₃CO oder CH₃CH₂CO ist, worin soweit möglich bis zu fünf Wasserstoffatome durch Fluor ersetzt sein können.

9. Elektrolytsystem nach einem oder mehreren der vorhergehenden Ansprüche, **dadurch gekennzeichnet, daß** in der Formel (I) R³ Wasserstoff oder Methyl ist.

10. Elektrolytsystem nach Anspruch 1, **dadurch gekennzeichnet, daß** in der Formel (I) R¹ CF₃, R² CF₃CO, R³ Wasserstoff oder Methyl, m gleich 1 und n 1 oder 2 ist.

11. Elektrolytsystem nach einem oder mehreren der vorhergehenden Ansprüche, **dadurch gekennzeichnet, daß** der Gehalt von Verbindungen der Formel (I) 2 bis 100, vorzugsweise 3 bis 30, Vol.-% des gesamten Elektrolytsystems beträgt.

12. Elektrolytsystem nach einem oder mehreren der vorhergehenden Ansprüche, **dadurch gekennzeichnet, daß** es neben dem Gehalt an mindestens einer Verbindung der Formel (I) einen zusätzlichen Gehalt an von Verbindungen der Formel (I) verschiedenen Carbonaten, Estern, Lactonen und/oder Nitrilen, vorzugsweise Ethylencarbonat und/oder Propylencarbonat, aufweist.

13. Elektrolytsystem nach einem oder mehreren der vorhergehenden Ansprüche, **dadurch gekennzeichnet, daß** es mit SO₂ oder CO₂ gesättigt ist.

14. Sekundäre Lithiumbatterie mit erhöhter Sicherheit, **dadurch gekennzeichnet, daß** die Batterie ein Elektrolytsystem gemäß den Ansprüchen 1 bis 13 enthält.

15. Verfahren zur Erhöhung der Sicherheit einer sekundären Lithiumbatterie, **dadurch gekennzeichnet, daß** man als Elektrolyt ein System gemäß den Ansprüchen 1 bis 13 einsetzt.

16. Verwendung von Verbindungen der allgemeinen Formel (I) gemäß den Ansprüchen 1 bis 10 in Sicherheits-Elektrolytsystemen für Lithiumbatterien.

## Claims

1. An electrolyte system for lithium batteries with increased safety, comprising at least one lithium-containing conducting salt and also at least one electrolyte liquid, **characterised by** an effective content of at least one partially fluorinated compound, derived from a diol, of the general formula (I)
R¹CO-O-[CHR³(CH₂)ₘ-O]ₙ-R² (I)
wherein
R¹ is (C₁-C₈)-alkyl or (C₃-C₈)-cycloalkyl, wherein each of the aforementioned radicals is partially fluorinated or perfluorinated, so that at least one hydrogen atom of the radical is replaced by fluorine,
R² is (C₁-C₈)-alkylcarbonyl or (C₃-C₈)-cycloalkylcarbonyl, wherein each of the aforementioned radicals may optionally be partially fluorinated or perfluorinated,
R³ is hydrogen, (C₁-C₈)-alkyl or (C₃-C₈)-cycloalkyl,
m is 0, 1, 2 or 3, and
n stands for 1, 2 or 3.

2. An electrolyte system according to Claim 1, **characterised in that** in Formula (I) the radical R¹ is (C₁-C₄)-alkyl, wherein three and where possible up to seven hydrogen atoms are replaced by fluorine atoms.

3. An electrolyte system according to Claim 1 or 2, **characterised in that** in Formula (I) the radical R² is (C₁-C₄)-alkylcarbonyl, wherein optionally where possible up to five hydrogen atoms are replaced by fluorine atoms.

4. An electrolyte system according to one or more of the preceding claims, **characterised in that** in Formula (I) the radical R³ is (C₁-C₄)-alkyl.

5. An electrolyte system according to one or more of the preceding claims, **characterised in that** in Formula (I) m stands for 1.

6. An electrolyte system according to one or more of the preceding claims, **characterised in that** in Formula (I) n is 1 or 2.

7. An electrolyte system according to one or more of the preceding claims, **characterised in that** in Formula (I) R¹ is CF₃, CHF₂ or CH₂F.

8. An electrolyte system according to one or more of the preceding claims, **characterised in that** in Formula (I) R² is CH₃CO or CH₃CH₂CO, wherein where possible up to five hydrogen atoms may be replaced by fluorine.

9. An electrolyte system according to one or more of the preceding claims, **characterised in that** in Formula (I) R³ is hydrogen or methyl.

10. An electrolyte system according to Claim 1, **characterised in that** in Formula (I) R¹ is CF₃, R² is CF₃CO, R³ is hydrogen or methyl, m is 1 and n is 1 or 2.

11. An electrolyte system according to one or more of the preceding claims, **characterised in that** the content of compounds of Formula (I) is 2 to 100, preferably 3 to 30, % by volume of the total electrolyte system.

12. An electrolyte system according to one or more of the preceding claims, **characterised in that** in addition to the content of at least one compound of Formula (I) it has an additional content of carbonates, esters, lactones and/or nitrites different from compounds of Formula (I), preferably ethylene carbonate and/or propylene carbonate.

13. An electrolyte system according to one or more of the preceding claims, **characterised in that** it is saturated with SO₂ or CO₂.

14. A secondary lithium battery with increased safety, **characterised in that** the battery contains an electrolyte system in accordance with Claims 1 to 13.

15. A method for increasing the safety of a secondary lithium battery, **characterised in that** a system in accordance with Claims 1 to 13 is used as electrolyte.

16. Use of compounds of the general formula (I) in accordance with Claims 1 to 10 in safety electrolyte systems for lithium batteries.

## Revendications

1. Système d'électrolyte pour piles au lithium à la sécurité renforcée, présentant au moins un sel conducteur à base de lithium ainsi qu'au moins un liquide électrolytique, **caractérisé par** une quantité efficace d'au moins un composé partiellement fluoré dérivé d'un diol et présentant la formule générale (I) :
R¹CO-O-[CHR³(CH₂)ₘ-O]ₙ-R² (I)
dans laquelle
R¹ est un groupe alkyle en C₁ à C₈ ou un groupe cycloalkyle en C₃ à C₈, chacun des radicaux susmentionnés étant perfluoré ou partiellement fluoré, de sorte qu'au moins un atome d'hydrogène du radical est substitué par un atome de fluor,
R² est un groupe alkyl(en C₁ à C₈)-carbonyle ou un groupe cycloalkyl(en C₃ à C₈)-carbonyle, chacun des radicaux susmentionnés pouvant être éventuellement perfluoré ou partiellement fluoré,
R³ est un hydrogène, un groupe alkyle en C₁ à C₈ ou un groupe cycloalkyle en C₃ à C₈,
m vaut 0, 1, 2 ou 3, et
n vaut 1, 2 ou 3.

2. Système d'électrolyte selon la revendication 1, **caractérisé en ce que** le radical R¹ de la formule (I) est un groupe alkyle en C₁ à C₄, dans lequel trois, et autant que possible jusqu'à sept atomes de carbone sont substitués par des atomes de fluor.

3. Système d'électrolyte selon la revendication 1 ou 2, **caractérisé en ce que** le radical R² de la formule (I) est un groupe alkyl(en C₁ à C₄)-carbonyle, dans lequel autant que possible jusqu'à cinq atomes de carbone sont éventuellement substitués par des atomes de fluor.

4. Système d'électrolyte selon une ou plusieurs des revendications précédentes, **caractérisé en ce que** le radical R³ de la formule (I) est un groupe alkyle en C₁ à C₄.

5. Système d'électrolyte selon une ou plusieurs des revendications précédentes, **caractérisé en ce que** m dans la formule (I) vaut 1.

6. Système d'électrolyte selon une ou plusieurs des revendications précédentes, **caractérisé en ce que** n dans la formule (I) vaut 1 ou 2.

7. Système d'électrolyte selon une ou plusieurs des revendications précédentes, **caractérisé en ce que** R¹ dans la formule (I) représente CF₃, CHF₂ ou CH₂F.

8. Système d'électrolyte selon une ou plusieurs des revendications précédentes, **caractérisé en ce que** R² dans la formule (I) représente CH₃CO ou CH₃CH₂CO, où, autant que possible, jusqu'à cinq atomes d'hydrogène peuvent être remplacés par des atomes de fluor.

9. Système d'électrolyte selon une ou plusieurs des revendications précédentes, **caractérisé en ce que** R³ dans la formule (I) représente un hydrogène ou un méthyle.

10. Système d'électrolyte selon la revendication 1, **caractérisé en ce que** R¹ dans la formule (I) représente CF₃, R² représente CF₃CO, R³ est un hydrogène ou un méthyle, m vaut 1 et n vaut 1 ou 2.

11. Système d'électrolyte selon une ou plusieurs des revendications précédentes, **caractérisé en ce que** la quantité de composés de formule (I) est comprise entre 2 et 100, de préférence entre 3 et 30 % en volume du système d'électrolyte total.

12. Système d'électrolyte selon une ou plusieurs des revendications précédentes, **caractérisé en ce qu'**il présente, outre la quantité d'au moins un composé de formule (I), une quantité supplémentaire de carbonates, esters, lactones et/ou nitriles différents des composés de formule (I), de préférence du carbonate d'éthylène et/ou du carbonate de propylène.

13. Système d'électrolyte selon une ou plusieurs des revendications précédentes, **caractérisé en ce qu'**il est saturé en SO₂ ou en CO₂.

14. Accumulateur au lithium à la sécurité renforcée, **caractérisé en ce que** la pile contient un système d'électrolyte selon les revendications 1 à 13.

15. Procédé pour renforcer la sécurité d'un accumulateur au lithium, **caractérisé en ce que** l'on utilise comme électrolyte un système selon les revendications 1 à 13.

16. Utilisation de composés de formule générale (I) selon les revendications 1 à 10 dans des systèmes d'électrolytes de sécurité pour piles au lithium.
